# EUROPEAN PATENT APPLICATION

(11) **EP 4 607 821 A1**
(43) Date of publication of application: **27.08.2025**
(21) Application number: 25150504.6
(22) Date of filing: 07.01.2025
(51) Int. Cl.: H04B 10/112

(54) **SYSTEM HAVING RECEIVER NODE AND SPACED APART RYDBERG SENSOR NODE AND ASSOCIATED METHODS**

(30) Priority: 13.02.2024 US 202418439791
(71) Applicant: Eagle Technology, LLC, Melbourne, FL 32919 (US)
(72) Inventor: BUCKLEW, Victor G., Richmond, 23235 (US); DRAKES, James, Occoquan, 22125 (US); LANGE, Michael R., Melbourne, 32934 (US); KNARR, Samuel H., Melbourne, 32940 (US); KOCAK, Donna M., Satellite Beach, 32937 (US); TOWERY, Charles R., Melbourne, 32904 (US); JHA, Uma Shanker, Indian Harbour Beach, 32937 (US)
(74) Representative: Schmidt, Steffen J.

(57) **Abstract**

A system **20** may include a receiver node **24** and a Rydberg sensor node **28** in spaced apart relation from the receiver node. A coupling laser **30** and a probe laser **32** may cooperate with the Rydberg sensor node **28** to generate a laser output to the receiver node **24** based upon a received radio frequency (RF) signal. The coupling laser **30** and probe laser **32** may define a transmitter node **38** in spaced apart relation from the Rydberg sensor node **28.** The transmitter node **38** may be co-located with the receiver node **24.**

## Description

### Field of the Invention

The present invention relates to the field of optical communications, and, more particularly, to a Rydberg sensor node that generates a laser output to a spaced apart receiver node based upon a received radio frequency (RF) signal.

### Background of the Invention

Radio frequency (RF) signals are generated and received in communications, sensing, and intelligence applications across a wide range of commercial markets and government divisions. Emerging RF applications are pushing requirements to higher frequency ranges with new waveforms that are difficult to detect and require RF receivers or sensors that have increased sensitivity. As RF channels become more heavily crowded, there is a desire to push to alternative RF bands spanning from tens of KHz to 300 MHz, and beyond. While some RF receivers and sensors span multiple bands, most are band-limited and can cover only a few tens of GHz, with a typical upper limit of about 40 GHz, e.g., Ka band. Also, some state-of-the-art RF receivers and sensors are not compatible with new waveforms used in emerging distributed sensing networks, and new RF applications that are sensitivity limited or not served with existing narrow band antenna-based receivers.

Conventional RF devices that incorporate RF antennas have a high technology readiness level (TRL) and are used in almost every modern RF sensing or communications system. There are limitations with RF antennas, however, because they are Size, Weight and Power (SWaP) limited. The antenna is also on the order of the RF wavelength of radiation, and the RF coverage is over a relatively narrow frequency band, such as 1-10 GHz or 20-40 GHz. Many conventional RF devices employ antenna designs that are not compatible with emerging waveforms and may lack sensitivity, making them difficult to cover wide bandwidths, such as tens of KHz to 300 MHz with high sensitivity.

To address these limitations, Rydberg atom-based RF sensors have been developed, which convert the response of an atomic vapor to incoming RF radiation into measurable changes in an optical probe. These RF sensors provide a new model for RF sensing with increased sensitivity.

In a Rydberg atom-based RF sensor, the measurement is based upon the attenuation of a probe laser due to absorption in a small room temperature vapor cell filled with alkali atoms, such as rubidium (Rb) or cesium (Cs). In a 2-photon/laser Rydberg sensing system, atoms are simultaneously excited into a "Rydberg" state with both a coupling and probe. These Rydberg states are very responsive to local electric fields and the response of the atom to an external electric field, such as an RF signal, alters the measured attenuation of the probe laser and is detected by a probe laser photo detector. For that reason, Rydberg sensors have been incorporated into different communications systems.

However, ensuring reliable, on-demand communication capabilities is an ongoing challenge in communication environments that are becoming increasingly more complex and crowded, even with the use of Rydberg sensors. The need to provide RF communications and detect RF communication signals between non-line-of-sight (LOS) communication nodes, or to quickly reconfigure communication nodes, is not facilitated with standard RF antenna relays or receivers, especially for frequencies that require larger antennas. The requirement to receive on an intermediate node, and then retransmit, can be cumbersome; slow; and size, weight and power (SWaP) incompatible with mission or commercial requirements.

Furthermore, in many concepts of operations, one or more communication nodes in non-LOS communications/sensing systems are SWaP limited, which prevents using a large RF antenna for ground collections, even if an intermediate node could be appropriately designed for the system. A low-SWaP, low latency, reconfigurable RF sensing-receiving architecture may provide an asset for mobile, ad-hoc, non-LOS communications, and early warning detection for many different communication requirements. The need to provide RF communications between non-LOS communication nodes may not be facilitated with standard RF technology, based on relays or bouncing communication signals off of objects such as the ionosphere or buildings. This is especially true for frequencies that require larger antennas. Even if a Rydberg sensor operating as a receiver is substituted for a more conventional RF transceiver, many conventional Rydberg sensors are limited to line-of-sight communications.

This requirement becomes even more challenging if very secure quantum communications are desired where information is exchanged between a transmitter node and a receiver node using encoded single photons. Each photon may carry information that is encoded on a property of the photons, such as its polarization, phase or energy and time. Quantum communication systems generally require sending information from one node to another node, such as a transmitter node, usually referred to as "Alice" and a receiver node, usually referred to as "Bob." Quantum communications may encompass quantum key distribution (QKD) systems that allow sharing of cryptographic key, quantum random number generator (QRNG) systems that use inherent indeterminacy of quantum entangled photons to produce random binary digits, and quantum secure direct communication (QSDC) systems that transfer direct information between Alice and Bob without a distribution key and other quantum protocols. Further improvements in Rydberg receivers and sensors and quantum communication systems are desirable to enhance secure non-LOS communications.

### Summary of the Invention

In general, a system may comprise a receiver node and a Rydberg sensor node in spaced apart relation from the receiver node. A coupling laser and a probe laser may cooperate with the Rydberg sensor node to generate a laser output to the receiver node based upon a received radio frequency (RF) signal.

The coupling laser and probe laser may define a transmitter node in spaced apart relation from the Rydberg sensor node. The transmitter node may be co-located with the receiver node. The laser output may comprise a free space laser output beam. The receiver node and the Rydberg sensor node each may comprise a respective pointing and tracking arrangement for the free space laser output beam.

The receiver node and the Rydberg sensor node may be underwater and the laser output may comprise an underwater laser output beam. In other embodiments, an optical fiber may be between the receiver node and Rydberg sensor node and the laser output may comprise an optical fiber laser output.

The Rydberg sensor node may comprise an aerial propulsion system and a controller coupled thereto in some embodiments. The receiver node may comprise a terrestrial receiver node in other embodiments. At least one other Rydberg sensor node may cooperate with the receiver node and the coupling laser and probe laser.

Another aspect is directed to a method of receiving a radio frequency (RF) signal that may comprise operating a Rydberg sensor node in spaced apart relation from a receiver node. The method may also include operating a coupling laser and a probe laser cooperating with the Rydberg sensor node to generate a laser output to the receiver node based upon an RF signal.

### Brief Description of the Drawings

Other objects, features and advantages of the present invention will become apparent from the detailed description of the invention which follows, when considered in light of the accompanying drawings in which:
FIG. 1 is a block diagram of the system having the Rydberg sensor node in spaced apart relation from the receiver node according to the invention.
FIG. 2 is a block diagram showing a more detailed example of the system of FIG. 1, where the transmitter and receiver nodes are co-located in the same platform.
FIG. 3 is a schematic diagram of the system showing the transmitter node, Rydberg sensor node, and receiver node in spaced apart relation.
FIG. 4 is a schematic diagram showing at least one other Rydberg sensor node cooperating with the receiver node.
FIG. 5 is a schematic diagram similar to FIG. 4 showing Rydberg sensor nodes cooperating as an advance warning for satellites.
FIG. 6 is a high-level flowchart of a method for receiving the radio frequency (RF) signal using the system of FIG. 1.
FIG. 7 is a block diagram of the system having the Rydberg sensor node in spaced apart relation from the receiver node and configured to generate a quantum secure laser output according to the invention.
FIG. 8 is a schematic diagram showing the Rydberg sensor node, transmitter node, and receiver node in spaced apart relation from each other and the generated quantum secure laser output.
FIG. 9 is a schematic diagram showing at least one other Rydberg sensor node cooperating with the receiver node with each Rydberg sensor node generating a quantum secure laser output to the receiver node.
FIG. 10 is a high-level flowchart showing a method for radio frequency (RF) communication using the system of FIG. 7.

### Detailed Description

The present description is made with reference to the accompanying drawings, in which exemplary embodiments are shown. However, many different embodiments may be used, and thus, the description should not be construed as limited to the particular embodiments set forth herein. Rather, these embodiments are provided so that this disclosure will be thorough and complete. Like numbers refer to like elements throughout.

As will be described in detail below, the system 20 is an improvement over existing Rydberg sensors having one Rydberg sensor head that integrates into one housing the coupling laser, probe laser, Rydberg sensor cells, and the detector as part of a receiver component. An example of this type of Rydberg sensor is described in U.S. Patent No. 11,598,798 to Bucklew et al., assigned to Eagle Technology, LLC, the disclosure of which is incorporated herein by reference in its entirety. The system 20 decouples the receiver component from the Rydberg cell, and in an example, may decouple the probe and coupling lasers so that the Rydberg cell may operate as a Rydberg sensor node spaced apart from a receiver node that contains a detector, and in an example, spaced apart from a transmitter node that contains the probe and coupling lasers.

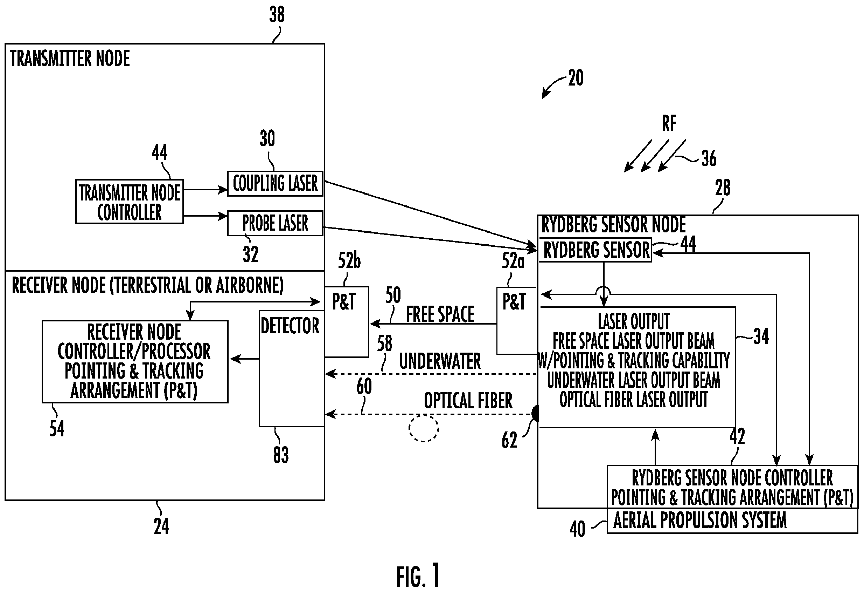

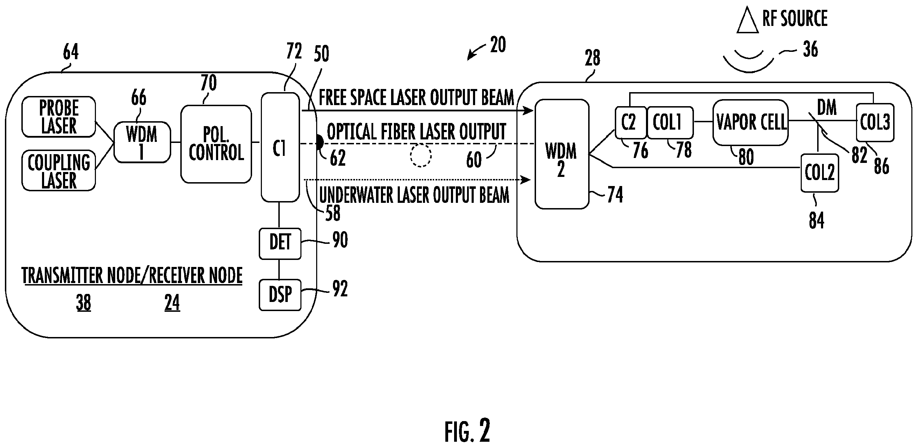

Referring initially to FIG. 1, the system **20** includes a receiver node **24** and the Rydberg sensor node **28** that is in spaced apart relation from the receiver node. A coupling laser **30** and probe laser **32** cooperate with the Rydberg sensor node **28** to generate a laser output **34** to the receiver node **24** based upon a received radio frequency (RF) signal indicated generally at **36.** The RF signals **36** may be transmitted from a satellite, ground-based transmitter, aircraft, airborne device such as a drone, or other RF transmitter device. As illustrated, the coupling laser **30** and probe laser **32** may define a transmitter node **38** in spaced apart relation from the Rydberg sensor node **28.** In some examples, however, the transmitter node **38** may be on one platform with Rydberg sensor node **28.** In the examples of FIGS. 1 and 2, the transmitter node **38** is co-located with the receiver node **24.** Spaced apart relation may indicate that nodes are geographically spaced, such as explained below with specific examples. Also, the Rydberg sensor node **28** may be housed on a different platform than the receiver node **24,** or on the same platform, such as an airplane. The coupling laser **30** and probe laser **32** may be housed on one or more transmitter nodes in spaced apart relation from the Rydberg sensor node **28.** A laser may be onboard the Rydberg sensor node **24,** another laser at a ground node, and another laser at a separate ground node, or combinations thereof. A plurality of lasers as the coupling laser **30** may excite the Rydberg sensor node **28** into a Rydberg state, such as described in U.S. Patent No. 11,815,538 to Bucklew et al., assigned to Eagle Technology, LLC, the disclosure which is hereby incorporated by reference in its entirety.

The Rydberg sensor node **28** may include an aerial propulsion system **40** and a controller **42** coupled thereto to operate the Rydberg sensor node as an aerial drone in some embodiments. In other embodiments, the receiver node **24** may be a terrestrial or ground-based receiver node co-located with the transmitter node **38.** The Rydberg sensor node **28** may operate as a drone similar to an elevated antenna, and receives the desired RF signals **36,** which alter the measured attenuation of the probe laser beam by converting the response of an atomic vapor in the Rydberg cell as a Rydberg sensor **44** to the RF radiation into measured changes in the optical probe laser beam.

A transmitter node controller **46** at the transmitter node **38** is connected to the coupling laser **30** and the probe laser **32** and is configured to operate the coupling laser and probe laser and tune the coupling laser so that the Rydberg sensor **44** responds at a desired RF frequency range at the Rydberg sensor node **28.** In the example of the Rydberg sensor node **28** configured with the aerial propulsion system **40** and operating as a drone, the laser output from the Rydberg sensor node **28** may be a free space laser output beam **50** shown by the solid line referenced free space in FIG. 1. A detector **83** at the receiver node **24** receives the laser output **34,** which may be processed at the receiver node controller/processor **54.**

The receiver node **24** and Rydberg sensor node **28** may each comprise a respective pointing and tracking arrangement (P&T) **52a,52b** for the free space laser output beam **50.** The Rydberg sensor controller **42** may operate the pointing and tracking arrangement **52a** at the Rydberg sensor node **28.** The receiver node **24** may include a separate receiver node controller **54** to operate the pointing and tracking arrangement **52b** at the receiver node for the free space laser output beam **50.**

For example, the laser output **34** from the Rydberg sensor node **28** to the receiver node **24** may operate as an alignment beam and adjustments may be made to the respective pointing and tracking arrangements **52a,52b** to ensure laser alignment. It is possible that the Rydberg sensor node **28** may generate a separate alignment beam that includes alignment data for an optical beam entrance aperture at the pointing and tracking arrangement **52b** at the receiver node **24.** An alignment beam may be applicable when the transmitter node **38** and receiver node **24** are co-located, so that the coupling laser **30** and probe laser **32** may be aligned with the Rydberg sensor node **28,** for example, when the Rydberg sensor node is an aerial drone. An example optical pointing and tracking arrangement **52a,52b** that may be used with the system **20** as described is disclosed in U.S. Patent Application No. 18/499,715, filed November 1, 2023, the disclosure which is hereby incorporated by reference in its entirety.

It is also possible for the receiver node **24** and Rydberg sensor node **28** in other embodiments to be underwater and the laser output **34** may be formed as an underwater laser output beam **58** as shown in FIG. 1. In another example embodiment, an optical fiber **60** may be between the receiver node **24** and Rydberg sensor node **28** and the laser output **34** and may be formed as an optical fiber laser output **62.** In an example, the optical fiber laser output **62** is coupled into the optical fiber **60,** forming an optical tether that operates as an optical umbilical to the Rydberg sensor node **28** when operating as a drone, which can be elevated above a tree canopy or other obstacles and have a direct line-of-sight to a satellite or other transmitter of RF signals **36** so that the Rydberg sensor node operates as a "stand-up" RF Rydberg antenna.

The system **20** may be formed from components such as described in the incorporated by reference '798 patent. An example of the system **20** generally described with reference to FIG. 1 may have the transmitter node **38** and receiver node **24** contained within one housing or platform **64** as shown in greater detail in the block diagram of FIG. 2. The transmitter node **38** and receiver node **24** are co-located and contained in the same housing as one platform **64,** which could be located on the ground or include components for a drone or be located on an aircraft or other locations.

As illustrated, the housing **64** as a single platform supports the coupling laser **30** and probe laser **32,** which transmit their respective laser beams to a first wavelength division multiplexer (WDM) **66** that merges both laser beams. Polarization is controlled as the merged laser beam passes through an E-polarization controller **70** and first optical circulator (C1) **72** for subsequent transmission in a free space laser output beam **50,** an underwater laser output beam **58,** or optical fiber **60** such as an optical fiber tether for an optical fiber laser output **62.**

The optical beam is received at the Rydberg sensor node **28,** where it is split into the two beams by a second wavelength division multiplexer (WDM) **74.** A first beam passes through a second optical circulator **76** and optical collimator **78** into the Rydberg cell, which in this example may be a Rydberg vapor cell **80.** The received RF signals **26** may be generated from a plane, satellite or other RF transmission source either on the ground or as an aerial transmitter. The split laser beam passes through the second collimator **84,** and in this example, into a deformable mirror (DM) **82,** which receives an optical signal from the vapor cell **80** and passes it into a third collimator **86** for feedback to the second optical circulator **76** and then back through the second WDM **74.** The deformable mirror **82** achieves wavefront control and correction of optical aberrations. The optical beam returns to the second optical circulator **76,** into the second wavelength division multiplexer **74,** and back to the co-located transmitter node **38** and receiver node **24,** where it passes through the first optical circulator **72** and into a detector **90** as part of the receiver node **24** and then processed at a digital signal processor (DSP) **92,** which may also operate as part of the receiver node controller/processor **54.**

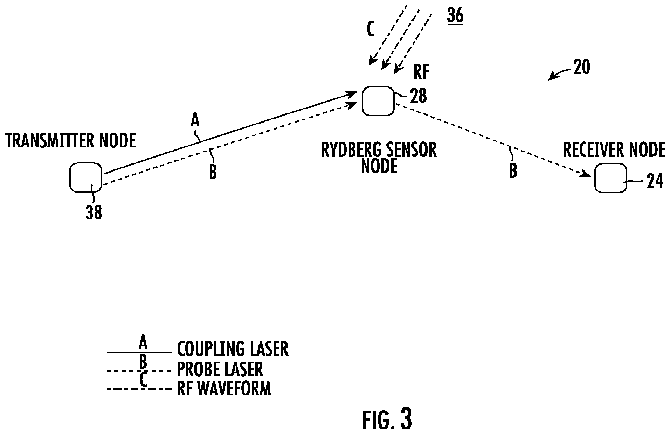

Referring now to FIG. 3, there is illustrated a schematic diagram showing an example where the receiver node **24** is separate and spaced apart from the transmitter node **38** and the Rydberg sensor node **28.** In this example, the Rydberg sensor node **28** may receive the RF signals **36,** such as from a drone, an RF device located on the ground, a plane, or other RF source. The transmitter node **38** having the coupling laser **30** and probe laser **32** energizes the Rydberg sensor node **28** via the coupling laser beam. The attenuation of the probe laser **32** due to absorption in the Rydberg sensor node **28** having a Rydberg vapor cell, for example, is caused by the local electric fields from the received RF signals **36,** which alter the measured attenuation of the probe laser and is detected at the receiver node **24** such as by an optical detector **83.** The system **20** shown in FIG. 3 may operate as a back-up for RF service denied areas and RF jammed networks, or operate for covert RF collections and communications. Because the Rydberg sensor node **28** is spaced apart from the receiver node **24** and transmitter node **38,** which are also spaced apart, all components may be a Size, Weight, and Power (SWaP) limited.

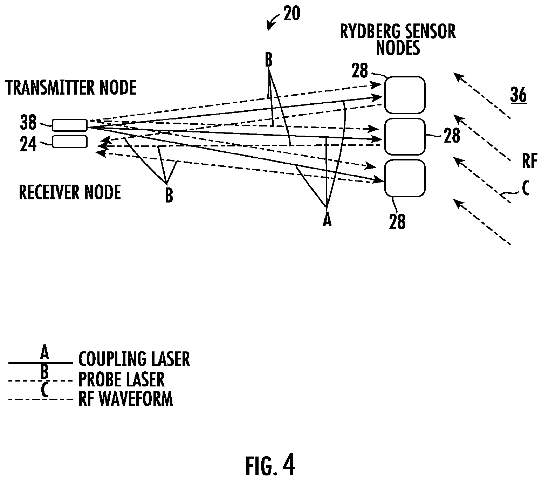

Referring now to FIG. 4, at least one other Rydberg sensor node may be included within the system **20.** The Rydberg sensor nodes are shown collectively as **28, 28a** and **28b** for a plurality of Rydberg sensor nodes, which cooperate with the receiver node **24** and the coupling laser **30** and probe laser **32** at the transmitter node **38.** In this example, three passive Rydberg sensor nodes **28, 28a, 28b** are illustrated, but a larger number may be employed. The multiple Rydberg sensor nodes **28, 28a, 28b** may be used for angle-of-arrival (AOA) determinations and may form a reconfigurable antenna shape by changing the distance to ground for the Rydberg sensor nodes and optimize the collection of RF signals. There may be multiple Rydberg sensor nodes **28, 28a, 28b,** each operating at a distance from each other and from the ground to form a large antenna system.

It is also possible to employ spatial point mapping for electronic field imagery such as for ISAR/SAR type applications where the multiple Rydberg sensor nodes **28, 28a, 28b** operate similar to a camera. The Rydberg sensor nodes **28, 28a, 28b** could each be located on a separate drone, thus allowing the positioning of each drone in a particular location spaced from each other and at selected elevations to configure a larger antenna.

When one or more different Rydberg sensor nodes **28** are used, there is usually a power difference between the probe laser **32** and the coupling laser **30.** Usually the coupling power in the coupling laser **30** is much higher than the power used in the probe laser **32.** For example, the power of the probe laser **32** may be in the microwatts to milliwatts range, while the power of the coupling laser **30** may be in the tens of milliwatts, such as 40 to 100 milliwatts range, depending on the spot size of the laser beam at the Rydberg sensor node **28.**

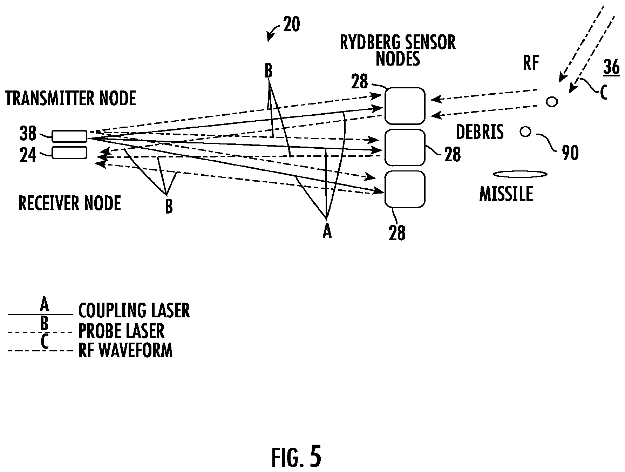

The configuration having multiple Rydberg sensor nodes **28, 28a, 28b** shown in FIG. 4 may also be used as a passive radar, or used to scavenge RF signals **36** from the environment. Each separate Rydberg sensing node **28, 28a, 28b** may carry a small parabolic dish type antenna to focus the RF radiation based on the RF signals **36.** An example of the system **20** for scavenging RF signals **36** is shown in FIG. 5, where Rydberg sensor nodes **28, 28a, 28b** are each optically connected to the transmitter node **38** and receiver node **24** that are co-located. The Rydberg sensor nodes **28, 28a, 28b** may operate as an advanced or early warning detection system for satellites based upon monitoring the scattered RF radiation as RF signals **36** from debris or flying objects **90,** similar to a passive radar system.

Other applications for the system **20** may include back haul communications using small space sensors with cross-linked distances ranging from a few kilometers to thousands of kilometers. An underwater application may include an optical fiber cable, or include free-space laser beams transmitted through the fluid from the probe laser **32** and coupling laser **30** to the Rydberg sensor node **28,** which in turn, generates a laser output **34** to the receiver node **24** based upon the received RF signals **36.** There may also be a back-up layer of RF communications with the Rydberg sensor node **28** in case existing and traditional RF communications between the different nodes are disrupted. RF waveforms may be transmitted between the various nodes of the system **20.**

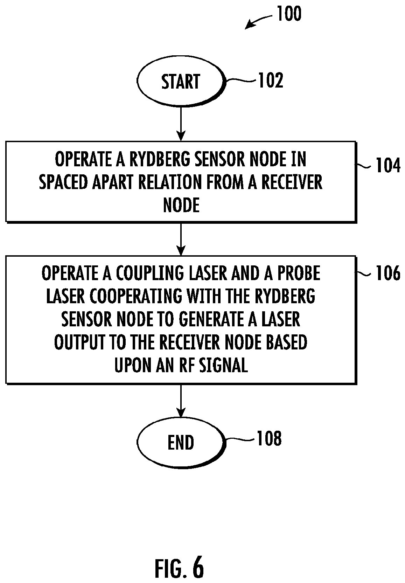

Referring now to FIG. 6, there is illustrated generally at **100** a flowchart showing an example of receiving a radio frequency (RF) signal **36.** The process starts (Block **102)** by operating a Rydberg sensor node **28** in spaced apart relation from a receiver node **24** (Block **104).** The method further includes operating a coupling laser **30** and a probe laser **32** cooperating with the Rydberg sensor node **28** to generate a laser output to the receiver node **24** based upon an RF signal **36** (Block **106).** The process ends (Block **108).**

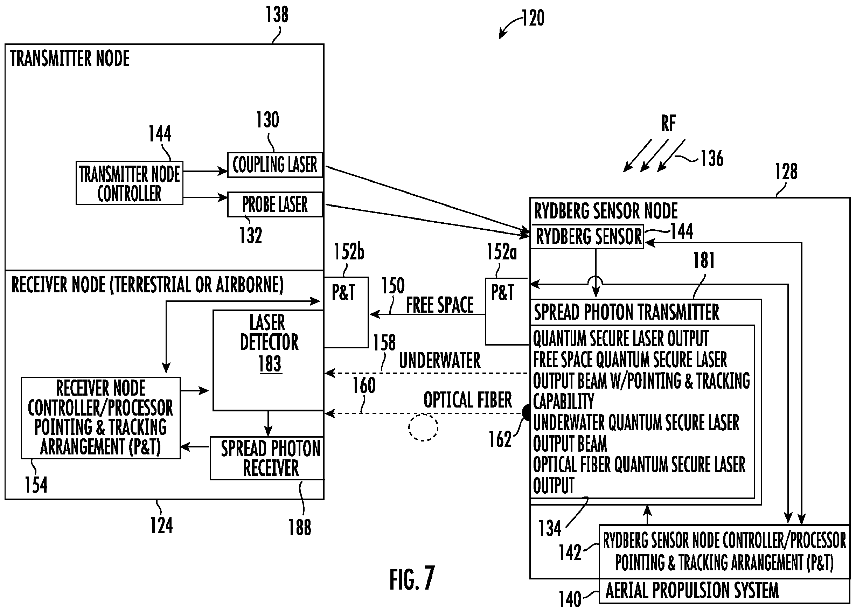

Referring now to FIG. 7, there is illustrated a system **120** similar to the system **20** described relative to FIGS. 1-6, except the system **120** has its Rydberg sensor node **128** configured to generate a quantum secure laser output **134** to the receiver node **124** based upon the received radio frequency (RF) signal **136.** Components in the system **120** similar to the components described in the system **20** are given similar reference numerals, but in the **100** series.

The system **120** provides for more secure communications in contested airspace. The system **120** includes the spaced apart receiver node **124** from the Rydberg sensor node **128** as in the system **20** of FIG. 1. The Rydberg sensor node **128** generates the quantum secure laser output **134** to the receiver node **124** based upon the received radio frequency (RF) signal **136** such as transmitted from a ground device, satellite, aircraft, drone, or other device.

The Rydberg sensor node **128** includes a Rydberg sensor **144** and a spread photon transmitter **181** coupled thereto that generates the quantum secure laser output **134.** As in the system **20** of FIG. 1, the coupling laser **130** and probe laser **132** cooperate with the Rydberg sensor node **128.** The coupling laser **130** and probe laser **132** may be integrated into one transmitter node **138** in spaced apart relation from the Rydberg sensor node **128.** The probe laser beam is attenuated at the Rydberg sensor **144** and the RF waveform of interest is encoded by the spread photon transmitter **181,** which encodes the RF information, attenuates it in some examples, and transmits it to the receiver node **124,** which in an example, may be co-located with the transmitter node **138** or separate.

The quantum secure laser output **134** may be a free space quantum secure laser output beam **150** that even in a contested airspace would be difficult to jam or intercept to determine the encoded data. Any tampering to the quantum secure laser output **134** would be detected at the receiver node **124.** Any tampering or attempt to obtain information is protected provided the user follows the prescribed quantum secure protocol, which is based on the spread photon transceiver, an example protocol of quantum data locking.

It is also possible that the receiver node **124** and the Rydberg sensor node **128** each includes a respective pointing and tracking arrangement **152a, 152b** for the free space quantum secure laser output beam **150** similar in function to the pointing and tracking arrangement **52a,52b** in the system **20** of FIG. 1. The receiver node controller/processor **154** operates in conjunction with the pointing and tracking arrangement **152b,** while the Rydberg sensor node controller/processor **142** operates in conjunction with the pointing and tracking arrangement **152a.** The Rydberg sensor node **128** may include an aerial propulsion system **140** and a Rydberg sensor node controller **142** coupled thereto forming a drone. The receiver node **124** may be a terrestrial receiver node located on the ground such as operated by an individual, and a drone carrying the Rydberg sensor node **128** may operate as a stand-up antenna.

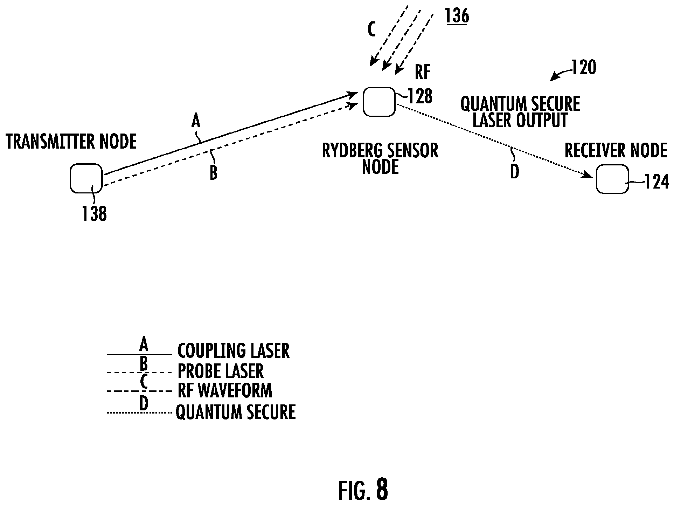

The receiver node **124** and the Rydberg sensor node **128** may be underwater and the quantum secure laser output **134** may be formed as an underwater quantum secure laser output beam **158.** An optical fiber **160** may be between the receiver node **124** and Rydberg sensor node **128.** The quantum secure laser output **134** includes an optical fiber quantum secure laser output **162.** Thus, the optical fiber **160** may be an optical tether for a drone forming a stand-up antenna. It is also possible for the Rydberg sensor node **128,** receiver node **124,** and transmitter node **138** to be spaced apart from each other as shown in FIG. 8 and function similar to the system **20** shown in FIG. 3, but instead, generating a quantum secure laser output **134.**

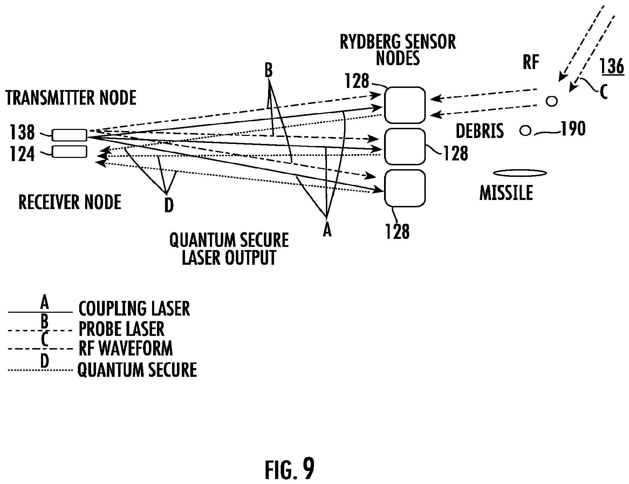

As shown in FIG. 9, at least one other Rydberg sensor node shown as three Rydberg sensor nodes **128, 128a, 128b** may cooperate with the receiver node **124** and the coupling laser **130** and probe laser **132** similar to the system **20** of FIG. 1 to allow angle-of-arrival measurements and permit a reconfigurable antenna shape by changing the distance to ground for the different Rydberg sensor nodes and optimize collection of RF signals or engage in spatial point mapping. The Rydberg sensor nodes **128, 128a, 128b** may also be used as an advanced warning for satellites when debris or a missile **190** approaches as described relative to the system of FIG. 1.

In an example, the quantum secure laser output **134** from the Rydberg sensor node **128** may have a 40+ GHz sampling rate that is spatio-temporal multiplexed. The spread photon transmitter **181** generates the quantum secure laser output **134** and cooperates with a laser detector **183** and spread photon receiver **185** at the receiver node **128** and may include various components included in a quantum communications system having pulses divided into time bins and using a pulse divider as described in U.S. Patent Nos. 11,451,308 and 11,502,758, assigned to Eagle Technology, LLC, the disclosures which are hereby incorporated by reference in their entirety.

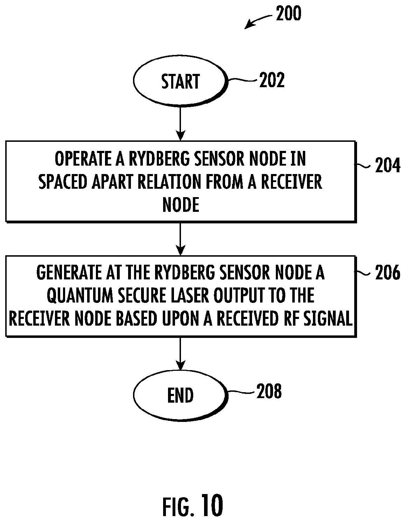

Referring now to FIG. 10, there is illustrated generally at **200** a flowchart showing an example method for radio frequency (RF) communication. The process starts (Block **202).** The Rydberg sensor node **128** operates in spaced apart relation from a receiver node **124** (Block **204).** The Rydberg sensor node **128** generates a quantum secure laser output **129** to the receiver node **124** based upon a received RF signal **136** (Block **206).** The process ends (Block **208).**

This application is related to copending patent applications entitled, **"SYSTEM HAVING RECEIVER NODE AND SPACED APART RYDBERG SENSOR NODE THAT GENERATES A QUANTUM SECURE LASER OUTPUT AND ASSOCIATED METHODS,"** which is filed on the same date and by the same assignee and inventors, the disclosure which is hereby incorporated by reference.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A system comprising:
a receiver node;
a Rydberg sensor node in spaced apart relation from the receiver node; and
a coupling laser and a probe laser cooperating with the Rydberg sensor node to generate a laser output to the receiver node based upon a received radio frequency (RF) signal.

2. The system of claim 1 wherein the coupling laser and probe laser define a transmitter node in spaced apart relation from the Rydberg sensor node.

3. The system of claim 1 wherein the laser output comprises a free space laser output beam.

4. The system of claim 1 comprising an optical fiber between the receiver node and Rydberg sensor node; and wherein the laser output comprises an optical fiber laser output.

5. The system of claim 1 wherein the Rydberg sensor node comprises an aerial propulsion system and a controller coupled thereto.

6. The system of claim 1 comprising at least one other Rydberg sensor node cooperating with the receiver node and the coupling laser and probe laser.

7. A method of receiving a radio frequency (RF) signal comprising:
operating a Rydberg sensor node in spaced apart relation from a receiver node; and
operating a coupling laser and a probe laser cooperating with the Rydberg sensor node to generate a laser output to the receiver node based upon an RF signal.

8. The method of claim 7 wherein the coupling laser and probe laser define a transmitter node in spaced apart relation from the Rydberg sensor node.

9. The method of claim 7 wherein the Rydberg sensor node comprises an aerial propulsion system and a controller coupled thereto, and the receiver node comprises a terrestrial receiver node.

10. The method of claim 7 comprising operating at least one other Rydberg sensor node cooperating with the receiver node and the coupling laser and probe laser.
